Europäisches Patentamt

European Patent Office

Office européen des brevets

(11) Publication number: **0 425 237 A2**

# EUROPEAN PATENT APPLICATION

(21) Application number: 90311597.0

(22) Date of filing: 23.10.90

(51) Int. Cl.⁵: **B60N 2/22**

(30) Priority: 23.10.89 JP 123741/89

(43) Date of publication of application:
02.05.91 Bulletin 91/18

(84) Designated Contracting States:
DE FR GB

(71) Applicant: **FUJI KIKO COMPANY LIMITED**
**1-13, Nihonbashihon-cho 3-chome Chuo-Ku**
**Tokyo(JP)**

(72) Inventor: **Mochizuki, Noboru**
**c/o Fuji Kiko Company, Ltd., Washizu-Plant**
**2028 Washizu,Kosai-shi, Shizuoka-ken(JP)**

(74) Representative: **Blanco White, Henry Nicholas**
**et al**
**ABEL & IMRAY Northumberland House**
**303-306 High Holborn**
**London WC1V 7LH(GB)**

(54) Reclining device for automotive seat.

(57) A reclining device for an automotive seat has internal and external gears interengageable to each other so as to lock a pivotal arm a selected reclining position of a seat back. The external gear is axially movable for establishing and releasing locking engagement with the internal gear. The external gear is normally biased to the position where the locking engagement of the internal gear is established. On the other hand, the external gear is associated with a cam mechanism associated with a release lever to be shifted to the position where locking engagement with the internal gear is released.

FIG.1

# RECLINING DEVICE FOR AUTOMOTIVE SEAT

The present invention relates generally to a reclining device for a seat of an automotive vehicle, which reclining device permits adjustment of angular position of a seat back relative to a seat cushion. More specifically, the invention relates to an automotive seat reclining device of the type which has internal and external gear teeth are interengaged for adjusting gear teeth by locking the seat back at a selected reclining position.

In the modern vehicle, it is common to facilitate a reclining device for a seat in order to permit adjustment of reclining angle of a seat back for comfortably seating. In general, such reclining device for the automotive seat includes a locking mechanism for locking the seat back at a selected angular position relative to a seat cushion. On the other hand, the most of the modern vehicle also employs a seat belt arrangement for tying up a passenger upon collision or so forth so as to protect the seat occupant from collision onto the vehicular equipments. So of the seat belt arrangements have belt retractors facilitated within the seat. Such type of seat installed therein the belt retractor is typically called as belt-in-seat.

In case of the belt-in-seat, since the reclining device receives relatively large stress upon collision, enough strength has to be provided for the reclining device to cause increasing of the weight of the device. For this, Japanese Utility Model First (unexamined) Publication (Jikkai) Showa 49-18811 (1974). In this publication, a reclining device with interengageable internal gear and an external gear is disclosed. The internal and the external gears are interengaged with each other at overall circumference for locking the seat back at selected reclining position. In the shown construction, a pivotal arm is secured onto a seat back is pivotally mounted on a base plate. The pivotal arm and the base plate are formed with through openings of equal radius. Internal gear teeth are formed on respective circumference of the through openings. The through openings are designed to form tapered internal serration when the openings are aligned. For the tapered internal serration, a gear member formed into bevel gear form and tapered external serration is inserted in axially displaceable fashion. The gear member is associated with the pivot extended from the base plate for axial movement thereabout. The gear member is also associated with a coil spring exerted spring force at one end. A ball member cooperated with a release lever is disposed opposing the other axial end of the gear member so as to cause axial shifting of the gear member by operation of the release lever.

Such prior proposed construction is assures maintaining of locking of the reclining device even when substantial stress is exerted for engagement of internal and external gears at overall circumference. However, on the other hand, when such prior proposed construction of the reclining device is employed for establishing vehicular seat reclining mechanism with double lock construction by providing the reclining device at both sides of the seat. The reclining devices at both sides of the seat have to be synchronously locked and unlocked. For establishing synchronous locking, the gear members are to be operated axially at the same timing. For enabling this, complicated construction becomes necessary for increasing bulk size of the reclining device and causes higher production cost. Furthermore, complicated construction lowers durability of the system.

In view of the drawbacks in the prior art set forth above, it is an object of the present invention to provide an automotive seat reclining device which can solve the problem set forth above.

Another and more specific object of the present invention is to provide a reclining device, which is simple in construction and thus compact and durable for practical use.

In order to accomplish aforementioned and other objects, a reclining device for an automotive seat, according to the present invention, has internal and external gears interengageable to each other so as to lock a pivotal arm a selected reclining position of a seat back. The external gear is axially movable for establishing and releasing locking engagement with the internal gear. The external gear is normally biased to the position where the locking engagement of the internal gear is established. On the other hand, the external gear is associated with a cam mechanism associated with a release lever to be shifted to the position where locking engagement with the internal gear is released.

According to one aspect of the invention, a reclining device for an automotive seat, comprises:
a stationary base fixed to a stationary component of the automotive seat;
a pivotal arm pivotable with respect to the stationary base together with a seat back of the automotive seat;
a first internal gear member rotatable according to pivotal motion of the pivotal arm;
a second internal gear member cooperated with the stationary base;
an external gear member engageable with the first and second internal gear for establishing locking engagement therebetween, the external gear member being axially movable with respect to the first and second internal gear between a first position where the locking engagement between the external gear member and the first and second internal gear is established and a second position where the external gear member is disengaged from the internal gear for permitting pivotal movement of the pivotal arm;

a spring associated with the external gear member for normally biasing the latter to the first position in order to maintain engagement between the external gear member and the first and second internal gear;

a manually operable lever operable for causing pivotal movement;

a lock releasing member associated with the manually operable lever for converting an operational force exerted on the manually operable lever into axial force for axially shifting the external gear member from the first position to the second position.

Preferably, the pivotal arm, the first and second internal gears, the manually operable lever are mounted on a common pivot shaft. The lock releasing member may have a taper surface tapered in circumferential direction and an actuation member interposed between the the cam surface and and the external gear member, the cam surface pushes the actuation member toward the external gear member for causing axial shifting from the first position to the second position.

The reclining device may further comprise a link mechanism having a member pivotally associated with the manually operable lever for rotatingly driving a link rod which is connected to another reclining device of an essentially identical construction for transmitting operational force for causing synchronous locking releasing and locking establishing operation. The reclining device may also comprise a spring member for normally biasing the manually operable lever to a position corresponding to the first position of the external gear member, the spring member being supported on the link mechanism.

The present invention will be understood more fully from the detailed description given herebelow and from the accompanying drawings of the preferred embodiment of the invention, which, however, should not be taken to limit the invention to the specific embodiment but are for explanation and understanding only.

In the drawings:

Fig. 1 is a side elevation of the preferred embodiment of a reclining device according to the present invention;

Fig. 2 is a section of the preferred embodiment of the reclining device of Fig. 1 which is sectioned along the lateral vertical plane;

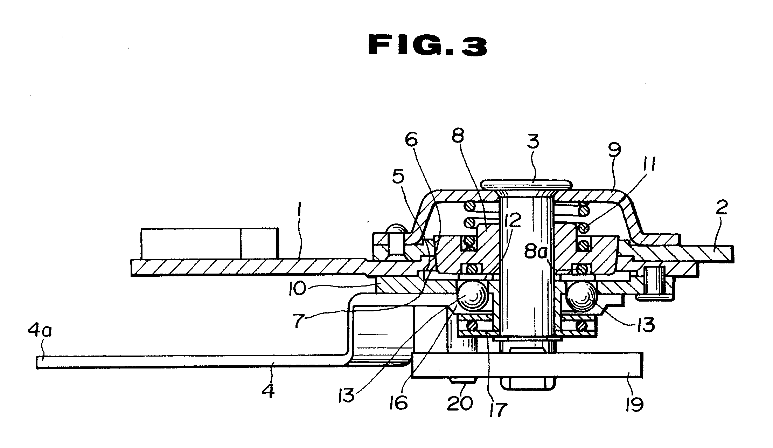

Fig. 3 is a section of the preferred embodiment of the reclining device of Fig. 1, which is sectioned along the horizontal plain;

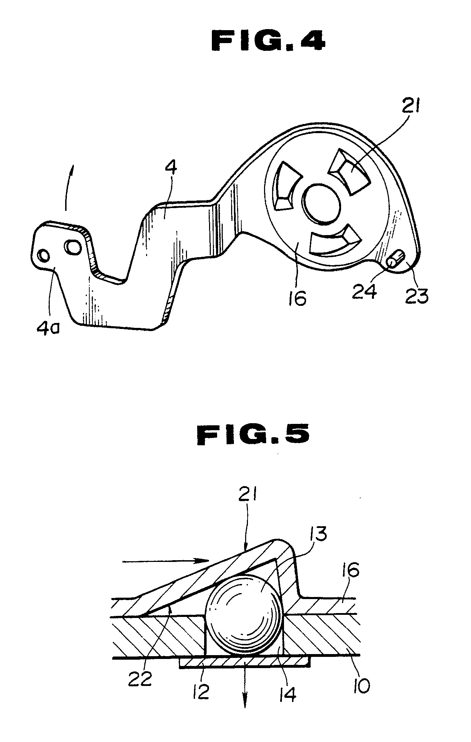

Fig. 4 is a perspective view of a release lever employed in the preferred embodiment of the reclining device of Fig. 1; and

Fig. 5 is an enlarged section showing part of the release lever of Fig. 4.

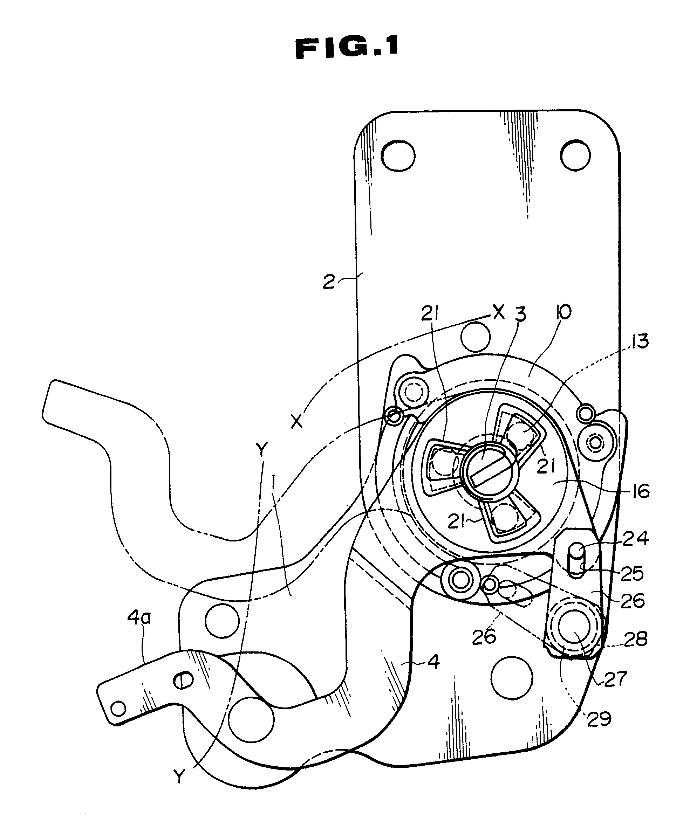

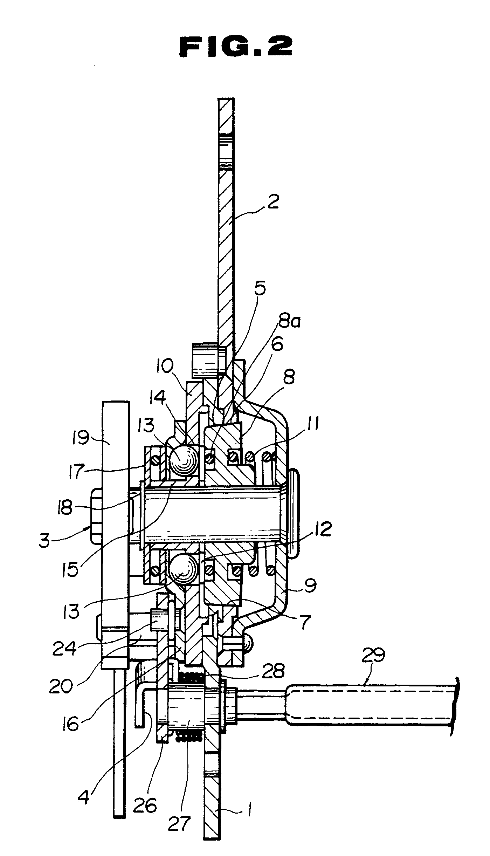

Referring now to the drawings, particularly to Figs. 1 and 2, the preferred embodiment of a reclining device for an automotive seat, according to the present invention, a base plate 1 is rigidly secured on a seat cushion frame (not shown). A pivotal aim 2 is pivotally supported on the base plate 1 by means of a pivot shaft 3 which is supported on a cover plate 9 connected thereto. Also, a release lever 4 is pivotably mounted on the base plate 1. A cover member 10 is also supported on the pivot shaft 3. The pivotal arm 2 and the cover plate 10 are formed with internal gear teeth 5 and 6. The internal gear teeth 5 and 6 are tapered outwardly to form taper serration as aligned. A bevel gear like external gear member 8 is disposed within the interior space defined in the pivotal arm 2 and the cover member and supported on the pivotal shaft 3. The external gear member 8 has external gear teeth meshing with the internal gear teeth 5 and 6. In addition, the external gear member 8 is movable in axial direction along the pivotal shaft 3. The external gear member 8 is resiliently and constantly biased toward the base plate 1 by means of a coil spring 11 for maintaining engagement between the internal gear teeth 5 and 6. An annular or ring shaped spacer 12 is disposed between the axial end of the external gear teeth 8 and the cover plate 10.

A ball bearing 8a is provided between the external gear member 8 and the spacer 12 for smooth relative rotation. On the other hand, a plurality of bearing balls 13 are disposed within the inner space 14 fined in the cover member 10. The bearing balls 13 are movable in axial direction within the inner space 14. A sleeve 15 is fitted on the pivot shaft 3. The bearing balls 10 are oriented between the sleeve 15 and the inner periphery of the cover member 10. A disc shaped base section 16 of the release lever 4 is pvotally supported on the sleeve 15. Thrust bearing 17 is adjacent the disc shaped base section 16 of the release lever 4. The thrust bearing 17 is retained on the sleeve 15 by means of a washer 18.

A spiral spring 19 is mounted on the axial end of the pivotal shaft 3 remote from the cover plate 9. The spiral spring 19 is wound around the pivotal shaft 3 and has the outer end associated with a pin 20 extended from the base plate.

The disc shaped base section 16 is formed with a plurality of cam grooves 21 which has essentially triangular cross section. The grooves 21 has a cam surface 22 which tilts in circumferential directions. A lever section 23 is integrally formed with the disc shaped base section 16. A pin 24 is extended from the lever section 23. The pin 24 engages with an elongated slot 25 formed in a linkage lever 26. The linkage lever 28 is pivotally mounted on a pivot 27. A torsion spring 28 is wound around the link rod 27. One end of the torsion spring 28 is connected to the linkage lever 20. The other end of the spiral spring 28 is connected to side edge of the base plate 1. The link rod 27 is associated with the corresponding link rod in the reclining device of the identical construction to that set forth above, at the other side of the seat.

Though the configuration of the release lever 4 is not specified to the shown configuration, the shown one is preferred since when the whole body is formed into plain plate form, the trace of motion of the lever section 23 as illustrated by line X - X in Fig. 1 may interfere with the seat cushion. Therefore, when seat cover is applied to the coat cushion, a mouth for permitting the release lever to pass along the line X - X. Such upwardly directed mouth will permit entry of dust, dirt and so forth into the inside of the reclining device. In contrast to this, with the shown specific construction, the trace of the motion of the lever section 23 of the release lever 4 becomes illustrated by the line Y - Y. As a result, the mouth to be formed through the seat cover may oriented in substantially vertical direction. The shown configuration of the release lever 4 is made practically applicable by providing the spiral spring on the link rod 27 of the release lever.

In the operation of the aforementioned construction of the reclining device, the external gear member 8 is normally depressed toward the base plate 1 for maintaining firm engagement between the internal gear teeth 5 and 6 and the external gear teeth 7. Therefore, the pivotal arm 2 is locked at a selected reclining position of the seat back. At this position, the bearing balls 13 is placed within the grooves 21 in a position as illustrated in Fig. 5. When the release lever 4 is pivotally operated about the pivot shaft 3, the cam surfaces 22 of respective grooves 21 pushes respectively associated bearing balls 13 toward the external gear member 8. Therefore, the external gear member 8 is axially shifted against the spring force of the bias spring 11 as depressed by the bearing balls 13 via the spacer 12. Therefore, engagement between the internal gear teeth 5 and 6 and the external gear teeth 7 is released to permit pivotal movement of the pivotal arm 2 relative to the base plate 1. At this position, the spiral spring 19 is active to cause pivotal movement of the pivotal arm 2 in counterclockwise direction. As is well known, the seat occupant can adjust the seat back reclining position by depressing the seat back by his back to the desired position. When the operational force on the release lever 4 is released, the spring force of the torsion spring 28 acts to return the release lever to the initial position. As a result, the release lever 4 is pivotally moved in counterclockwise direction in Fig. 1. Therefore, the positional relationship between bearing balls 13 and the grooves 21 returns to the initial position as shown in Fig. 5. Therefore, as set forth, firm engagement between the internal gear teeth 5 and 6 and the external gear teeth 7 is established for firmly locking the pivotal arm.

As can be appreciated herefrom, the present invention fulfills all of the objects and advantages sought therefor.

While the present invention has been discussed in detailed in terms of the present invention, the invention can be embodied in various ways. Therefore, the invention should be understood to include all possible embodiments and modifications which can be embodied without departing from the principle of the invention.

## Claims

1. A reclining device for an automotive seat, comprising:
a stationary base fixed to a stationary component of the automotive seat;
a pivotal arm pivotable with respect to said stationary base together with a seat back of said automotive seat;
a first internal gear member rotatable according to pivotal motion of said pivotal arm;
a second internal gear member cooperated with said stationary base;
an external gear member engageable with said first and second internal gear for establishing locking engagement therebetween, said external gear member being axially movable with respect to said first and second internal gear between a first position where said locking engagement between said external gear member and said first and second internal gear is established and a second position where said external gear member is disengaged from said internal gear for permitting pivotal movement of said pivotal arm;
a spring associated with said external gear member for normally biasing the latter to said first position in order to maintain engagement between said external gear member and said first and second internal gear;
a manually operable lever operable for causing pivotal movement;
a lock releasing member associated with said manually operable lever for converting an operational force exerted on said manually operable lever into axial force for axially shifting said external gear member from said first position to said second position.

2. A reclining device as set forth in claim 1, wherein said pivotal arm, said first and second internal gears, said manually operable lever are mounted on a common pivot shaft.

3. A reclining device as set forth in claim 1 or claim 2, wherein said lock releasing member has a taper surface tapered in circumferential direction and an actuation member interposed between said said cam surface and and said external gear member, said cam surface pushes said actuation member toward said external gear member for causing axial shifting from said first position to said second position.

4. A reclining device as set forth in any one of claims 1 to 3, which further comprises a link mechanism having a member pivotally associated with said manually operable lever for rotatingly driving a link rod which is connected to another reclining device of an essentially identical construction for transmitting operational force for causing synchronous locking releasing and locking establishing operation.

5. A reclining device as set forth in claim 4, which further comprises a spring member for normally biasing said manually operable lever to a position corresponding to said first position of said external gear member, said spring member being supported on said link mechanism.

# FIG.1

# FIG.2

# FIG.3

# FIG.4

# FIG.5

Neu eingereicht / Newly filed
Nouvellement déposé